# EUROPEAN PATENT SPECIFICATION

(11) **EP 3 855 703 B1**
(45) Date of publication and mention of the grant of the patent: **05.11.2025**
(21) Application number: 19863687.0
(22) Date of filing: 17.09.2019
(51) Int. Cl.: H04L 43/0852, H04L 41/0896, H04L 41/0816, H04L 43/20, H04L 41/0897

(54) **TRAFFIC RESOURCE MANAGEMENT METHOD, NETWORK DEVICE, AND READABLE STORAGE MEDIUM**
DIENSTRESSOURCENVERWALTUNGSVERFAHREN, NETZWERKVORRICHTUNG, UND LESBARES SPEICHERMEDIUM
PROCÉDÉ DE GESTION DE RESSOURCES DE SERVICE, DISPOSITIF DE RÉSEAU, ET SUPPORT DE STOCKAGE LISIBLE PAR MACHINE

(30) Priority: 17.09.2018 CN 201811083536
(43) Date of publication of application: 28.07.2021
(73) Proprietor: ZTE Corporation, Shenzhen Guangdong 518057 (CN)
(72) Inventor: XIE, Baoguo, Shenzhen, Guangdong 518057 (CN); CHEN, Lijuan, Shenzhen, Guangdong 518057 (CN); PAN, Jiaqiang, Shenzhen, Guangdong 518057 (CN)
(74) Representative: Ricker, Mathias
(86) International application number: PCT/CN2019/106126
(87) International publication number: WO 2020/057490

(56) References cited:
- WO-A1-2018/149263
- CN-A- 105 979 007
- US-A1- 2016 134 474
- "Multi-access Edge Computing (MEC); MEC support for network slicing", vol. ISG MEC Multi-access Edge Computing, no. V2.0.5, 31 July 2018 (2018-07-31), pages 1 - 21, XP014322898, Retrieved from the Internet <URL:docbox.etsi.org/ISG/MEC/70-Draft/0024NWslicing/MEC-0024NWslicingv205/MEC-0024NWslicingv205-cl.docx> [retrieved on 20180731]
- NEC EUROPE LTD: "EVE017-LLMANO-UseCase-Discussion", vol. WG NFV EVE Evolution and Ecosystem, 9 September 2018 (2018-09-09), pages 1 - 31, XP014323202, Retrieved from the Internet <URL:docbox.etsi.org/ISG/NFV/EVE/05-CONTRIBUTIONS/2018/NFVEVE(18)000125_EVE017-LLMANO-UseCase-Discussion.pptx> [retrieved on 20180909]
- ZTE CORPORATION: "Final Draft GS MEC 010-2 AppLcRulesReqMgm v1.0.1", vol. ISG - MEC - Multi-access Edge Computing, no. 1.0.1, 2 May 2017 (2017-05-02), pages 1 - 46, XP014293560, Retrieved from the Internet <URL:docbox.etsi.org\ISG\MEC\70-Draft\0010-2AppLcRulesReqMgm\MEC-0010-2AppLcRulesReqMgmv101.docx> [retrieved on 20170502]
- ORANGE: "REL010 Draft v004", vol. WG NFV REL Reliability & Availability, no. .0.4, 12 September 2018 (2018-09-12), pages 1 - 25, XP014328191, Retrieved from the Internet <URL:docbox.etsi.org/ISG/NFV/REL/05-CONTRIBUTIONS/2018/NFVREL(18)000110_REL010_Draft_v004.zip/1/NFVREL(18)000110 REL010 Draft v004 cm.docx> [retrieved on 20180912]
- BT GROUP: "Implications of Network Function Virtualisation", 3GPP TSG-SA WG3 MEETING #92, S3-182426, vol. SA WG3, 14 August 2018 (2018-08-14), XP051541517

## Description

### TECHNICAL FIELD

The present disclosure relates to the field of network communication, for example, a traffic resource management method, a network device, and a readable storage medium.

### BACKGROUND

Network functions virtualization (NFV) is a software processing technology that carries other functions by use of general-purpose hardware and a virtualization technology and aims to reduce the expensive device costs of a network. The NFV makes the functions of a network device no longer depend on specific-purpose hardware by means of software and hardware decoupling and function abstraction so that resources can be sufficiently and flexibly shared, new traffic can be rapidly developed and deployed, and automatic deployment, elastic scaling, fault isolation, self-healing, and the like are performed based on actual traffic requirements.

In the era of the 5th generation mobile communication technology (5G), the NFV is used for network orchestration and management of a network slice (NS), a network service (NS), or a virtualized network function (VNF) used in network networking of the 3rd Generation Partnership Project (3 GPP). For example, the NS or the VNF implements a network function (NF) by using a VNF instance and the network slice is implemented by using a network service instance (NSI). However, the related NFV technology does not involve traffic-related content, does not perform network orchestration or deployment according to the differentiated characteristics of traffic, and does not dynamically adjust network service resources or network deployment according to changes in traffic performance during a network operation. As a result, during the deployment of the network slice, network service, or VNF instance, resource allocation, and a traffic operation, resource adjustment cannot be distinguished between ultra-low latency traffic or other traffic with a low priority, differentiated management cannot be performed for different traffic requirements and performance, and the actual performance requirements of the ultra-low latency traffic during network operation cannot be satisfied, and user experience is to be improved. Some traffic resource management methods are known from "Multi-access Edge Computing (MEC); MEC support for network slicing", ETSI DRAFT SPECIFICATION; MEC 024, EUROPEAN TELECOMMUNICATIONS STANDARDS INSTITUTE (ETSI), 650, ROUTE DES LUCIOLES; F-06921 SOPHIA-ANTIPOLIS; FRANCE vol. ISG MEC Multi-access Edge Computing, no. V2.0.5 31 July 2018 (2018-07-31), pages 1-21.

Further traffic resource management methods are also known from NEC EUROPE LTD: "EVE017-LLMANO-UseCase-Discussion", ETSI DRAFT; NFVEVE (18) 000125, EUROPEAN TELECOMMUNICATIONS STANDARDS INSTITUTE (ETSI), 650, ROUTE DES LUCIOLES; F-06921 SOPHIA-ANTIPOLIS; FRANCE vol. WG NFV EVE Evolution and Ecosystem 9 September 2018 (2018-09-09), pages 1-31.

Further traffic resource management method are also known from ZTE CORPORATION: "Final Draft GS MEC 010-2 AppLcRulesReqMgm v1.0.1", ETSI DRAFT; MEC(17)000300, EUROPEAN TELECOMMUNICATIONS STANDARDS INSTITUTE (ETSI), 650, ROUTE DES LUCIOLES; F-06921 SOPHIA-ANTIPOLIS; FRANCE vol. ISG - MEC - Multi-access Edge Computing, no. 1.0.1 2 May 2017 (2017-05-02), pages 1-46.

Further relevant technologies are also known from ORANGE: "REL010 Draft v004", ETSI DRAFT; NFVREL(18)000110, EUROPEAN TELECOMMUNICATIONS STANDARDS INSTITUTE (ETSI), 650, ROUTE DES LUCIOLES; F-06921 SOPHIA-ANTIPOLIS ; FRANCE, vol. WG NFV REL Reliability & Availability, no. .0.4 12 September 2018(2018-09-12), pages 1-25, XP014328191.

The CN 105 979 007 A discloses an acceleration resource processing method and device and a network function virtualization system. The method comprises the following steps: receiving an acceleration resource request of a service, wherein the acceleration resource request includes attribute parameters of acceleration resources and a service acceleration resource scheduling strategy, and the service acceleration resource scheduling strategy is determined according to a service demand of the service; and determining the acceleration resources of the service according to the attribute parameters of the acceleration resources and the service acceleration resource scheduling strategy. According to the method, the acceleration resources are selected according to the service acceleration scheduling strategy, so that specific requirements such as time delay sensitivity of the service can be met, and the time delay and performance of the service can be improved.

### SUMMARY

Embodiments of the present disclosure provide a traffic resource management method, a network device, and a readable storage medium.

The invention is set out in the appended set of claims.

### BRIEF DESCRIPTION OF DRAWINGS

FIG. 1 is a schematic diagram of system architecture of NFV.
FIG. 2 is a schematic diagram of a management flow of VNF instantiation according to an embodiment of the present disclosure.
FIG. 3 is a schematic diagram of a management flow of NS instantiation according to an embodiment of the present disclosure.
FIG. 4 is a flowchart of a traffic resource management method according to embodiment one of the present disclosure.
FIG. 5 is a schematic diagram of ultra-low latency traffic resource management and operation strategies according to embodiment two of the present disclosure.
FIG. 6 is a schematic diagram of instantiation deployment of an NS/VNF serving ultra-low latency traffic according to embodiment three of the present disclosure.
FIG. 7 is a schematic diagram of a solution for a decrease of ultra-low latency traffic performance according to embodiment four of the present disclosure.
FIG. 8 is a schematic diagram of a solution for movement of a service area of ultra-low latency traffic according to embodiment five of the present disclosure.
FIG. 9 is a schematic diagram of a traffic resource management apparatus according to embodiment six of the present disclosure.
FIG. 10 is a schematic diagram of composition of a network device according to embodiment seven of the present disclosure.

### DETAILED DESCRIPTION

Embodiments of the present disclosure are described below through implementations in conjunction with drawings. The embodiments described herein are intended to explain and not to limit the present disclosure.

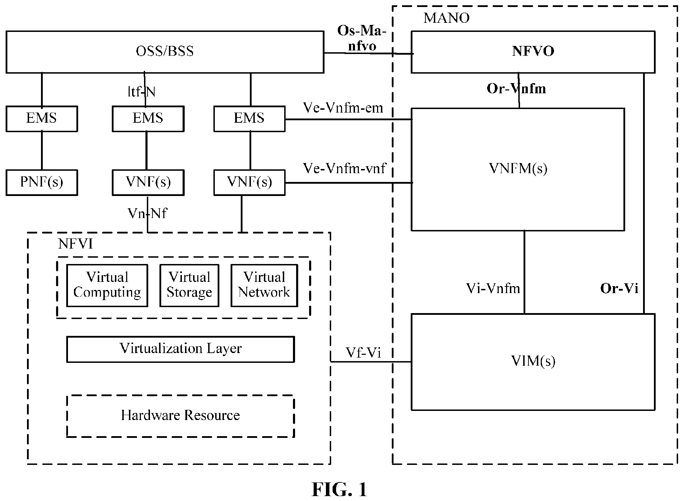

As shown in FIG. 1, the system architecture of NFV defined by the European Telecommunications Standards Institute (ETSI) includes an Operations Support System /Business Support System (OSS/BSS), a virtualized network function (VNF), a network functions virtualization infrastructure (NFVI), and a VNF-management and orchestration (NFV-MANO). The NFVI comprehensively virtualizes hardware resources for computing, storage, and a network and maps the hardware resources into virtual resources. The VNF implements various physical network functions by use of software, operates on the NFVI, and adopts the virtual resources after virtualization by the NFVI. The NFV-MANO manages and orchestrates a relationship between the VNF and the NFVI and a connection between VNFs and/or connections between the VNF and other physical network functions (PNFs). In FIG. 1, ltf-N represents an interface between the OSS and an EMS, Os-Ma-nfvo represents an interface between the OSS and an NFVO, Or-Vnfm represents an interface between the NFVO and a VNFM, Ve-Vnfm-em represents an interface between the EMS and the VNFM, Ve-Vnfm-vnf represents an interface between the VNF and the VNFM, Vn-Nf represents an interface between the VNF and the NFVI, Vf-Vi represents an interface between the NFVI and a VIM, Vi-Vnfm represents an interface between the VIM and the VNFM, Or-Vi represents an interface between the NFVO and the VIM, and Or-Vnfm represents the interface between the NFVO and the VNFM.

The NFVI is infrastructure and is generally divided into an access data center (DC), an edge DC, and a central DC according to an area where it is deployed. The access DC is closest to a user, such as a base station (BS). The edge DC is farther away from the user than the access DC, such as a Radio Network Controller (RNC). The central DC is farthest from the user, such as a core network (CN).

The NFV-MANO (abbreviated as MANO in the present application) includes a Virtualized Infrastructure Manager (VIM), a virtualized network function manager (VNFM), and a Network Function Virtualization Orchestrator (NFVO). The VIM is responsible for controlling and managing virtualized resources. The VNFM is responsible for managing a life cycle of the VNF. The NFVO is responsible for orchestrating and managing infrastructure and managing a life cycle of a network service (NS).

An NFV system is applied to a 3GPP network and can perform life cycle management such as instantiation deployment for different network slices, NSs, or VNFs of the 3GPP network. For example, the NFV system performs instantiation deployment for the NS or the VNF of the 3GPP, such as a virtual Enhanced Packet Core (vEPC) and its internal virtual mobility management entity (vMME) and a virtual Packet Data Network Gateway (vPGW), so as to satisfy the requirements for network construction and operations.

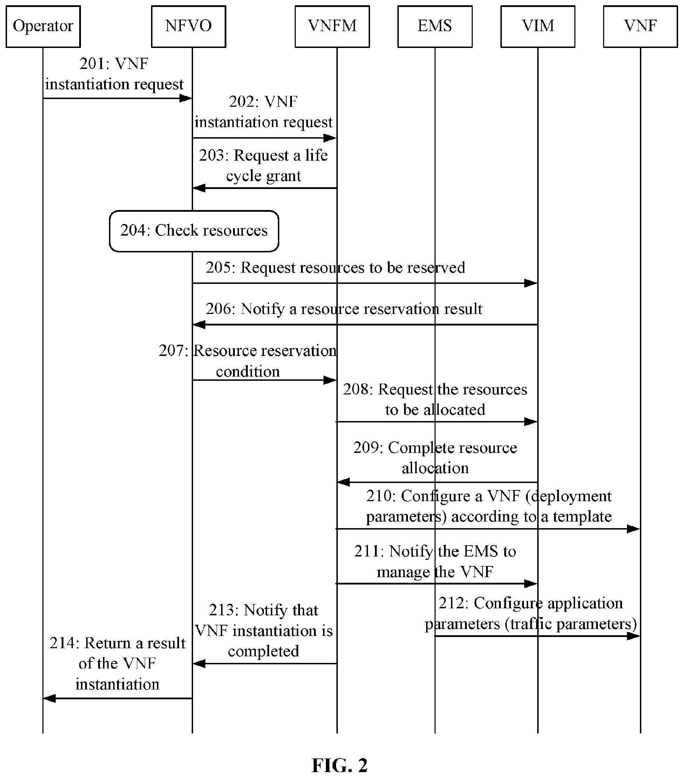

As shown in FIG. 2, a management flow of VNF instantiation is described below.

In steps 201 and 202, an operator initiates a VNF instantiation request to an NFVO, and the NFVO initiates the VNF instantiation request to a VNFM after receiving the VNF instantiation request. In steps 203 to 206, the VNFM requests a VNF life cycle operation grant from the NFVO, the NFVO checks resources required for VNF instantiation and requests a VIM to reserve the resources, and the VIM notifies the NFVO after reserving the resources.

In steps 207 to 209, the NFVO notifies the VNFM that the resources are reserved successfully and specific information about the resources. The VNFM requests the resources required for VNF instantiation from the VIM, and the VIM notifies the VNFM after allocating the resources.

In steps 210 to 212, the VNFM configures VNF deployment parameters according to a template of a virtualized network function descriptor (VNFD) and notifies an element management system (EMS) to manage a VNF, and the EMS configures application parameters for the VNF.

In steps 213 and 214, the VNFM notifies the NFVO that the VNF instantiation is completed, and the NFVO notifies the operator that a VNF instantiation process is completed.

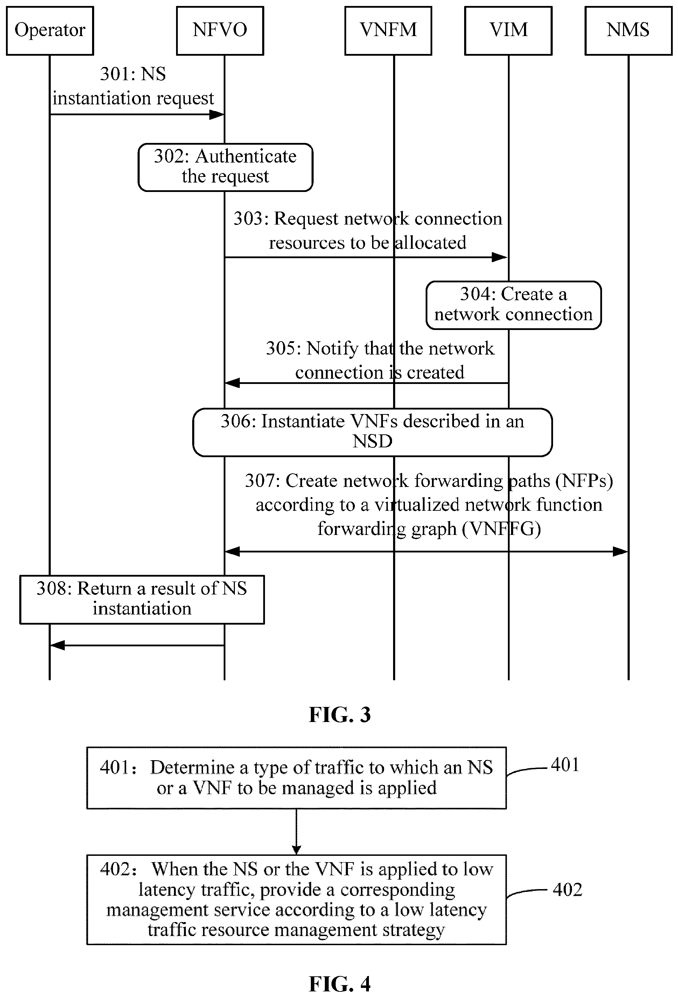

As shown in FIG. 3, a management flow of NS instantiation is described below.

In step 301, a user/operator newly instantiates an NS through an operation on a management interface and sends an NS instantiation request carrying a network service descriptor (NSD) with NS instantiation parameters to an NFVO. A request message carries a network service instance descriptor (NSID).

In steps 302 and 303, after receiving the NS instantiation request, the NFVO authenticate rights and parameters in the request. After authentication, the NFVO requests a VIM to create a network connection according to information about a network connection, a virtual link (VL), in the NSD. In steps 304 and 305, the VIM creates a network required for a network service (NS) according to a received indication of the network connection and then returns a network creation result to the NFVO.

In step 306, the NFVO interacts with a VNFM to instantiate VNFs according to the VNFs involved in the NSD.

In step 307, after the VNFs are instantiated, the NFVO interacts with a software-defined network controller (SDNC) to establish connections between VNFs, connections between VNFs and physical network functions (PNFs), and a forwarding relationship therebetween.

In steps 308 and 309, after completing the network connection, a network manager returns a connection result to the NFVO, and the NFVO returns a result of NS instantiation to the user/operator.

A mobile communication technology is developing from a connection between people and information in 4G to the Internet of everything in 5G. 5G includes three traffic scenarios: enhanced Mobile Broadband (eMBB), Ultra-Reliable and Low Latency Communications (URLLC), and massive machine-type communication (mMTC). Ultra-low latency traffic corresponds to a new URLLC traffic scenario defined in 3GPP 5G scenarios. A key technical performance requirement of the ultra-low latency traffic is an end-to-end data communication latency not less than 10 ms and an extreme requirement of the ultra-low latency traffic is an end-to-end data latency of 1 ms. The ultra-low latency traffic has a variety of traffic scenarios such as precise control in the industry, auto driving, smart healthcare, and other 5G applications, which require ultra-low latency data communications to achieve accurate operation and control. In various embodiments of the present disclosure, low latency traffic generally refers to the ultra-low latency traffic, that is, traffic with a data communication latency not less than 10 ms and an extreme latency requirement of 1 ms.

### Embodiment one

This embodiment provides a traffic resource management method. Referring to FIG. 4, the traffic resource management method includes steps 401 and 402.

In step 401, a type of traffic to which an NS or a VNF to be managed is applied is determined. In step 402, when the type of traffic to which the NS or the VNF is applied is low latency traffic, a corresponding management service is provided for the NS or the VNF according to a low latency traffic resource management strategy.

The NS or the VNF to be managed in this embodiment may include a network slice (NS) or a virtualized network function (VNF). The NS or VNF implements network functions virtualization by using an NFV technology according to respective specifications. The NS or the VNF may implement virtualization in respective manners, which includes that a network function (NF) is implemented by using a VNF instance and a network slice (NS) is implemented by using a network service instance (NSI).

The NS or the VNF may have various application scenarios, such as eMBB, URLLC, and mMTC mentioned above. The URLLC may be applied to various traffic scenarios such as precise control in the industry, auto driving, and smart healthcare, which have a high latency requirement.

The method may further include content described below.

The low latency traffic resource management strategy includes at least one of strategies described below.

A resource for the NS or the VNF for the low latency traffic is preferentially allocated.

The NS or the VNF for the low latency traffic is deployed at a position close to a user. Given a latency requirement, the low latency traffic tends to require more resource redundancy to satisfy the latency requirement when a relatively large file is processed. Therefore, to ensure a resource for the low latency traffic, the low latency traffic may be configured with a higher resource allocation priority so that during resource allocation, a requirement of the low latency traffic is preferentially satisfied. Moreover, when the NS or the VNF for the low latency traffic is deployed at the position close to the user, a transmission duration can be reduced as much as possible, so as to ensure the timeliness of the low latency traffic.

When the network resources are insufficient, the network service (NS) or the virtualized network function (VNF) for the low latency traffic may preempt a resource occupied by traffic other than the low latency traffic, so as to ensure that its performance satisfies a traffic requirement. When the network service (NS) or the virtualized network function (VNF) for the low latency traffic is instantiated, a resource applied by the NS or the VNF may be over-configured.

In some embodiments, the step in which the type of traffic to which the NS or the VNF to be managed is applied is determined may include steps described below.

It is determined whether an information model description of the NS or the VNF includes a description of a low latency traffic parameter.

When the information model description of the NS or the VNF includes the description of the low latency traffic parameter, it is determined that the NS or the VNF is applied to the low latency traffic. The low latency traffic parameter may include at least one of a latency parameter, a position deployment parameter, a resource requirement parameter, or a low latency traffic identification. The information model description of the NS or the VNF is different according to a type of the NS or the VNF. An information model description of the VNF is a VNFD, and an information model description of the NS is an NSD. The latency parameter may represent a latency requirement of the traffic, the position deployment parameter represents a deployment position of the traffic, the resource requirement parameter represents a resource required by the traffic, and the low latency traffic identification directly identifies whether the type of traffic is the low latency traffic.

In some embodiments, the method may further include a step described below.

When a request is initiated for an operation on the NS or the VNF, a low latency traffic indication is carried in the request for the operation, where the low latency traffic indication is used for indicating that the operation is applied to the low latency traffic. An operation request may be an instantiation request or other operation requests.

In some embodiments, the method may further include a step described below.

When the NS or the VNF is instantiated, an instance for the low latency traffic is deployed at a local data center (DC) or a DC close to the user according to at least one of the low latency traffic resource management strategy or the low latency traffic parameter carried in an information model of the NS or the VNF. The local DC or the DC close to the user may be an access DC, an edge DC, or the like.

In some embodiments, the method may further include a step described below.

The low latency traffic resource management strategy is configured, and a low latency traffic resource operation strategy is generated according to the low latency traffic resource management strategy.

In some embodiments, the method may further include a step described below.

When an operation corresponding to the operation request is identified as an operation applied to the low latency traffic, the operation is performed by using the low latency traffic resource operation strategy.

In some embodiments, the method may further include a step described below.

When the NS or the VNF applied to the low latency traffic is instantiated, a traffic resource for the NS or the VNF is over-configured according to the low latency traffic resource management strategy. An over-configuration refers to a configuration of resources more than what is required in theory in a configuration process of the low latency traffic, thereby providing a certain redundancy for the low latency traffic and ensuring a normal requirement of the low latency traffic. In some embodiments, the method may further include steps described below.

Low latency traffic performance during an operation of the NS or the VNF is determined. When the low latency traffic performance, the traffic resource for the NS or the VNF is dynamically increased, so as to improve the low latency traffic performance.

In some embodiments, the step in which the low latency traffic performance during the operation of the NS or the VNF is determined may include at least one of steps described below. Notification information in response to the decrease of the low latency traffic performance is received, and the low latency traffic performance during the operation of the NS or the VNF is determined according to the notification information.

Data on the low latency traffic performance of the NS or the VNF is collected, and the low latency traffic performance during the operation of the NS or the VNF is determined according to the data on the low latency traffic performance. The low latency traffic performance may be acquired through receiving and reporting or an active acquisition. The active acquisition may be an acquisition at a certain period or a random acquisition according to a predetermined algorithm.

In some embodiments, the method may further include a step described below.

When the low latency traffic performance does not satisfy a requirement and/or a local resource occupied by the NS or the VNF is insufficient, an NS or a VNF that operates other traffic with a low priority is migrated according to priorities of local traffic. After traffic with a low priority is migrated, a ratio at which the local resource is provided for the low latency traffic can be increased to a certain extent, thereby ensuring the low latency traffic performance.

In an embodiment, the method further includes at least one of steps described below.

When the low latency traffic performance does not satisfy the requirement and/or the local resource occupied by the NS or the VNF is insufficient, the low latency traffic preempts, as a high traffic priority, a resource for a low traffic priority according to a traffic resource strategy. When the low latency traffic performance does not satisfy the requirement and/or the local resource occupied by the NS or the VNF is insufficient, an NS or a VNF for traffic with a low traffic priority is migrated or terminated, and a resource is released for the low latency traffic to use.

In some embodiments, when movement of the low latency traffic occurs, the method may further include a step described below.

A resource is reserved for a migration of the NS or the VNF in a target area of the movement.

After the resource is reserved, when the low latency traffic moves to this area, an NS/VNF for the low latency traffic may be deployed in a target DC area, or an NS/VNF at a source DC may be migrated to the target DC area.

According to the traffic resource management method provided by the embodiments of the present disclosure, the type of traffic to which the NS or the VNF to be managed is applied is determined; and when the NS or the VNF is applied to the low latency traffic, the corresponding management service is provided for the NS or the VNF according to the low latency traffic resource management strategy. In some implementations, targeted management is performed on the NS or the VNF based on the type of traffic to which the NS or the VNF is applied so that differentiated management of the low latency traffic is achieved and user experience is improved. In the embodiments of the present disclosure, an MANO may download or configure the low latency (or ultra-low latency) traffic resource management strategy and formulate a different ultra-low latency traffic resource operation strategy for an NFVO/VNFM/VIM. According to the ultra-low latency traffic resource management and operation strategies, the NS/VNF for the traffic may be deployed at the position close to the user, resources are over-allocated, resource adjustment is performed in time when traffic performance decreases, and a resource for a low traffic priority is preempted when the resource is insufficient.

In addition, the MANO may also subscribe to or periodically collect data on ultra-low latency traffic performance according to characteristics of the ultra-low latency traffic. When the MANO senses that a decrease of the ultra-low latency traffic performance reaches an early warning, the MANO can actively initiate the adjustment of a resource or a deployment position of the NS/VNF for the ultra-low latency traffic so that the ultra-low latency traffic performance can be recovered in time and the user experience is satisfied.

When a service area of the ultra-low latency traffic moves, a resource required by the ultra-low latency traffic is reserved in a target area of movement, and a timer may be set. If the service area fails to move to the area within a specified time, the reserved resource is released so that resource utilization is maximized. If the service area of the ultra-low latency traffic moves to the target area, a related NS/VNF in a source area is migrated to the target area or a new NS/VNF is instantiated in the target area for the ultra-low latency traffic.

### Embodiment two

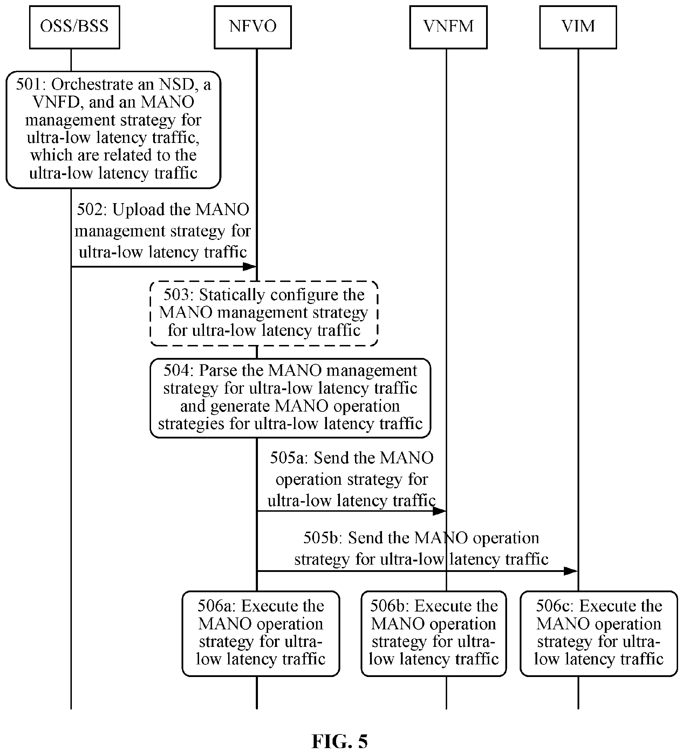

This embodiment relates to ultra-low latency traffic resource management and operation strategies. As shown in FIG. 5, in this embodiment, for ultra-low latency traffic, an OSS/BSS formulates a strategy for the ultra-low latency traffic according to an ultra-low latency traffic performance requirement. The strategy includes how to allocate a resource and deploy a position, how to preferentially allocate and schedule resources, how to timely recover ultra-low latency traffic performance according to data on the traffic performance or a performance alarm, and so on for NS/VNF instantiation deployment.

This embodiment is implemented in conjunction with steps described below.

In step 501, a service provider requests the OSS/BSS to provide the ultra-low latency traffic, where an ultra-low latency traffic identification and a traffic requirement are carried. The OSS/BSS plans an NSD/VNFD of the ultra-low latency traffic and formulates the related ultra-low latency traffic resource management strategy such as resource allocation and position deployment strategies for an NS/VNF for the ultra-low latency traffic.

For example, for the resource allocation during instantiation deployment, an ultra-low latency management strategy may be setting that the allocated resource is 105% of an applied resource or other percentages higher than 100% of the applied resource.

The position deployment strategy for the ultra-low latency traffic may be setting that the NS/VNF can only be deployed at an edge DC or an access DC closest to a user.

A resource preemption strategy may be setting that the NS/VNF for the ultra-low latency traffic may preempt a resource for an NS/VNF for other traffic with a lower priority in a current DC when the traffic performance cannot be satisfied.

In step 502, the OSS/BSS sends the ultra-low latency traffic resource management strategy to an NFVO through an interface between the OSS/BSS and the NFVO, and the NFVO stores the strategy and formulates an ultra-low latency traffic resource operation strategy executable by a VNFM/VIM, so as to provide particular position deployment and preferential resource allocation for an NS/VNF instance for the ultra-low latency traffic.

In step 503, the NFVO may also statically configure an ultra-low latency management strategy. In step 504, the NFVO parses the received or statically configured ultra-low latency management strategy and generates the ultra-low latency traffic resource operation strategies executable by the NFVO, the VNFM, and the VIM. When the ultra-low latency management strategy is updated, the ultra-low latency traffic resource operation strategies for the NFVO, the VNFM, and the VIM are updated synchronously.

In step 505, the NFVO delivers the ultra-low latency traffic resource operation strategy executable by the VNFM/VIM to the VNFM/VIM, where an ultra-low latency traffic indication is carried. In step 506, the NFVO/VNFM/VIM executes related resource and position deployment strategies according to an ultra-low latency operation strategy and feeds an execution result back to the NFVO, and the NFVO returns an execution condition to the OSS according to the requirement. Implementations of the ultra-low latency traffic resource management strategy and its execution are described in subsequent embodiments according to different scenarios.

With this embodiment, the NFVO generates, according to the ultra-low latency traffic resource management strategy, the ultra-low latency traffic resource operation strategies executable by different MANO entities and sends the ultra-low latency traffic resource operation strategies to the corresponding MANO entities. The MANO entities execute the ultra-low latency traffic resource operation strategies to adjust the resource and position deployment for the VNF/NS serving the traffic, ensure the ultra-low latency traffic performance, and enhance user experience.

### Embodiment three

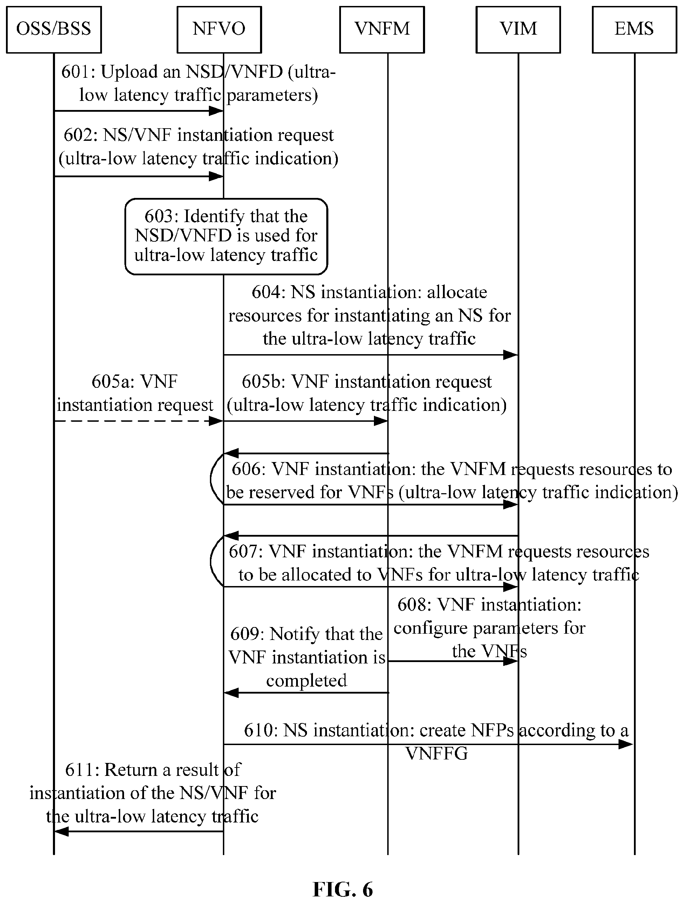

This embodiment relates to deployment for instantiating an NS/VNF serving ultra-low latency traffic. As shown in FIG. 6, when an NSD/VNFD is uploaded to an NFVO, ultra-low latency traffic parameters are carried. An MANO identifies that an NS or VNF instantiated by using the NSD/VNFD is the NS/VNF serving the ultra-low latency traffic. When the NFVO or a VNFM performs NS/VNF instantiation, the NS or some VNFs may be deployed locally or at a position close to a user according to enhanced position deployment specifications for the ultra-low latency traffic in the NSD/VNFD or according to an operation strategy of an MANO entity for the ultra-low latency traffic. If a DC where position deployment is to be performed has insufficient resources, a VIM adjusts resources to ensure that the NS or the VNFs for the ultra-low latency traffic can be instantiated and deployed in this area.

This embodiment is implemented in conjunction with steps described below.

In step 601, an OSS/BSS adds the ultra-low latency traffic parameters to the NSD/VNFD to indicate that the NS/VNF instantiated by using the NSD/VNFD serves the ultra-low latency traffic. The position deployment specifications for the ultra-low latency traffic are added to the NSD/VNFD, so as to specify whether the instantiated NS/VNF is deployed on NFVI at an access DC, edge DC, or central DC.

If the ultra-low latency traffic parameters or the position deployment specifications are not carried in the NSD/VNFD, the MANO entity will perform position deployment and dynamic resource adjustment according to an ultra-low latency traffic resource operation strategy during instantiation deployment and an operation state.

In step 602, when a service provider needs to create a new network service or a new NS or VNF to operate the ultra-low latency traffic requested by the user, the NS or the VNF is instantiated by the MANO.

The OSS/BSS (an operator) sends a request for instantiating the NS or the VNF for the ultra-low latency traffic (through a management interface) to the NFVO, where a request message carries an NSD/VNFD parameter and an ultra-low latency traffic identification.

In step 603, the NFVO identifies through the ultra-low latency traffic parameters carried in the NSD/VNFD that the NSD/VNFD is used for the ultra-low latency traffic. If an ultra-low latency parameter is not carried in the NSD/VNFD, the NFVO performs an identification according to the ultra-low latency traffic identification carried in the request message.

In step 604, each MANO entity executes the ultra-low latency traffic resource operation strategy to implement an operation for instantiating the NS/VNF for the ultra-low latency traffic.

In the case of NS instantiation, the NFVO and the VNFM select a VIM that manages a corresponding positional area according to information about a deployment position and request resources for the NS serving the ultra-low latency traffic from the VIM. The resources are not limited to network connection resources, VNF instantiation resources, resources for connections and forwarding between VNFs, and the like. The request carries the ultra-low latency traffic indication. The VIM deploys the resources for the NS according to both an ultra-low latency operation strategy and the NSD/VNFD, of which position deployment specifications with best latency performance is used.

If NS resources or VNF resources requested in a deployment area are insufficient, the ultra-low latency traffic may preempt virtual resources for traffic with a lower priority according to the ultra-low latency traffic resource operation strategy such as resource preemption, that is, the resources for the ultra-low latency traffic with a high priority are preferentially ensured. The VIM releases or migrates resources for other traffic with a lower priority to ensure the resources for the ultra-low latency traffic.

An example of position deployment is as follows: if the NSD describes the position deployment at the edge DC and some VNFDs describe the deployment at the access DC, network resources, computing resources, and storage resources related to some VNFs are deployed at the access DC and other VNFs may be deployed at the access DC or the edge DC.

In another example, if the NSD describes the NS deployed at the central DC and the NS is required to be deployed at the edge DC in the ultra-low latency traffic resource management strategy, the NS is finally deployed at the edge DC with a highest ultra-low latency level.

An example of resource preemption is as follows: the VIM can identify a priority of other traffic in an area where the NS/VNF for the ultra-low latency traffic is deployed. When the NS/VNF for the ultra-low latency traffic is deployed at the edge DC, if resources are insufficient, the VIM finds resources allocated to eMBB traffic with a lower priority in this area and the VIM migrates the resources allocated to the eMBB traffic to the central DC or other edge DCs with idle resources. If resources in other DCs cannot satisfy a resource requirement of the traffic, the VIM releases the resources for the traffic and allocates the released resources to the ultra-low latency traffic.

According to different rules of the ultra-low latency traffic resource operation strategy, when migrating or releasing resources for other traffic, the VIM may request the VNFM and the NFVO for releasing or migrating an NS/VNF for traffic with a low priority and obtain an approval, or the VIM may be authorized by the NFVO/VNFM to directly migrate or release resources and notify the VNFM and the NFVO later.

In step 605, if the NS for the ultra-low latency traffic is instantiated, VNFs in the NS are instantiated, or the OSS requests that merely VNFs serving the ultra-low latency traffic be instantiated separately.

VNF instantiation operation: the NFVO initiates a VNF instantiation request to the VNFM, where the instantiation request carries the ultra-low latency traffic identification.

In step 606, the VNFM parses the VNFD and requests a VNF life cycle operation grant from the NFVO, where information about enhanced ultra-low latency parameters such as an ultra-low latency indication and deployment specifications in the VNFD is carried. The NFVO selects a VIM according to a deployment rule or a deployment rule in the ultra-low latency traffic resource management strategy and requests the VIM to reserve resources, where the ultra-low latency traffic indication is carried. The VIM notifies the NFVO after reservation. If resources required for deploying the VNFs are insufficient, the VIM performs resource migration or release. Reference is made to step 504.

In step 607, the NFVO notifies the VNFM that the resources are reserved successfully and specific information about the resources. The VNFM requests the resources required for VNF instantiation from the VIM, where the ultra-low latency traffic indication is carried.

The VIM deploys the resources for the VNFs according to both the ultra-low latency operation strategy and the VNFD, of which position deployment specifications with best latency performance is used.

If the VNF resources requested in the deployment area are insufficient, the ultra-low latency traffic may preempt virtual resources for traffic with a lower priority according to the ultra-low latency traffic resource management strategy, for example, the resources for the ultra-low latency traffic with a high priority are preferentially ensured. The VIM releases or migrates VNF resources for other traffic with a lower priority to ensure the VNF resources for the ultra-low latency traffic.

An example of position deployment is described below.

If the VNFD describes a VNF deployed at the central DC and the VNF is required to be deployed at the edge DC in the ultra-low latency traffic resource management strategy, the VNF is finally deployed at the edge DC with a highest ultra-low latency level.

An example of resource preemption is as follows: the VIM can identify a priority of traffic carried by another VNF in an area where the VNF for the ultra-low latency traffic is deployed. For example, when the VNF for the ultra-low latency traffic is deployed at the edge DC, if resources are insufficient, the VIM finds VNF resources allocated to eMBB traffic with a lower priority in this area and the VIM migrates the resources allocated to the eMBB traffic to the central DC or other edge DCs with idle resources. If resources in other DCs cannot satisfy a resource requirement of the traffic, the VIM releases the resources occupied by a VFN for the traffic and allocates the released resources to the ultra-low latency traffic.

According to different rules of the ultra-low latency traffic resource management strategy, when migrating or releasing resources for other traffic, the VIM may request the VNFM and the NFVO for releasing or migrating the resources and obtain an approval, or the VIM may be authorized by the NFVO/VNFM to directly migrate or release resources and notify the VNFM and the NFVO later.

In step 608, the VNFM configures a VNF deployment parameter according to a VNFD template and notifies an EMS to manage the VNF. The EMS configures application parameters for the VNF.

In step 609, the VNFM notifies the NFVO that the VNF instantiation is completed, and the NFVO notifies the OSS/BSS or an operator that a VNF instantiation process is completed.

In step 610, after an NS instance is successfully established, an NSI identification is associated with the ultra-low latency traffic identification, indicating that the NS instance is used for the ultra-low latency traffic, and the OSS/operator is notified of an establishment success.

With this embodiment, when the NS/VNF for the ultra-low latency traffic is instantiated, the NS/VNF is deployed at the position close to the user, such as the access DC or the edge DC, according to the ultra-low latency traffic parameters and the ultra-low latency traffic resource operation strategy. If the access DC or the edge DC for the deployment has insufficient resources, occupied resources for traffic with a lower priority at the access DC or the edge DC are released, for example, migrated or released, so as to ensure resource allocation required by the ultra-low latency traffic.

### Embodiment four

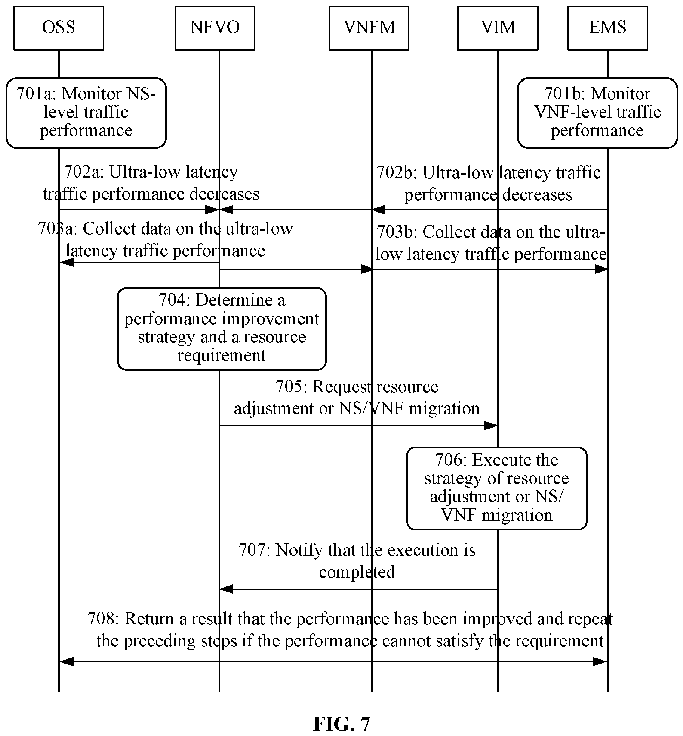

This embodiment relates to a solution for a decrease of ultra-low latency traffic performance. As shown in FIG. 7, with this embodiment, when the ultra-low latency traffic performance decreases and cannot satisfy a traffic requirement of ultra-low latency which is, for example, lower than 10 ms specified, an MANO performs resource scheduling and position deployment adjustment for an NS/VNF serving ultra-low latency traffic, so that the requirement on the ultra-low latency traffic performance is satisfied.

This embodiment is implemented in conjunction with steps described below.

In step 701, the ultra-low latency traffic performance decreases and cannot satisfy the requirement on the ultra-low latency traffic performance, for example, ultra-low latency performance is specified as 10 ms. A traffic processing capability of the NS/VNF decreases due to an increase of users in an operation process so that the latency increases and exceeds a minimum latency requirement of 10 ms.

In step 702, when the ultra-low latency traffic performance decreases, an OSS or an EMS notifies the MANO in time. For example, the OSS/BSS notifies an NFVO of a decrease in processing performance of the NS serving the ultra-low latency traffic and the EMS notifies a VNFM of a decrease in performance of the VNF serving the ultra-low latency traffic and then the VNFM notifies the NFVO. A notification message carries an NS or VNF instance ID, an ultra-low latency traffic identification, and a parameter of the decrease in traffic performance such as a percentage of the decrease in traffic performance.

The OSS or EMS may also perform a forecast according to historical data. When the ultra-low latency traffic performance decreases to a predetermined threshold, the OSS or the EMS may initiate an early warning of the decrease of the ultra-low latency traffic performance to the MANO. The NFVO may also subscribe to a notification or an early warning of the decrease of the ultra-low latency traffic performance. The NFVO sends a subscription notification of an early warning for ultra-low latency performance to the OSS/EMS, where an ultra-low latency traffic performance identification is carried. The OSS or the EMS notifies the NFVO in time in response to a decrease in traffic performance or an early warning.

Alternatively, in step 703, the NFVO sends a query request for data on the ultra-low latency traffic performance to the OSS/EMS, where the query request carries the ultra-low latency traffic identification. The NFVO regularly collects the data on the ultra-low latency traffic performance and determines whether to perform performance adjustment according to an ultra-low latency operation strategy.

In step 704, after receiving a notification that the ultra-low latency traffic performance decreases, an MANO system determines a manner for improving the ultra-low latency traffic performance. According to an ultra-low latency traffic resource operation strategy, the performance of the NS/VNF serving the ultra-low latency traffic may be enhanced in two manners. A first manner is to increase resources for the NS/VNF for the ultra-low latency traffic so that a traffic processing capability of the NS/VNF is restored and the traffic performance is improved. A second manner is to adjust position deployment of the NS/VNF so that the NS/VNF for the ultra-low latency traffic is adjusted to a position closer to a user. For example, the NS/VNF is originally deployed at a central DC. When the latency does not satisfy the requirement, the NS/VNF deployed at the central DC may be migrated to an edge DC or an access DC so that a transmission path is shortened and an end-to-end traffic latency can be greatly reduced.

If a resource adjustment manner is used, the NFVO generates a resource requirement to be adjusted according to the parameter of the decrease in performance or information about the early warning.

The parameter of the decrease in performance is, for example, a decrease by percentages such as 20% and 40%. A warning threshold is, for example, percentages such as 120% and 140% of a minimum performance requirement.

In step 705, the MANO initiates a request for adjusting NS/VNF resources for the ultra-low latency traffic to a VIM that manages NS/VNF resources, where the request carries an ultra-low latency traffic indication, an NS/VNF instance ID, and the resource requirement to be adjusted. In step 706, the VIM performs an operation of resource adjustment or migration according to the ultra-low latency traffic resource operation strategy and an indication of NS/VNF migration or an indication of resource adjustment delivered by the NFVO.

In the resource adjustment manner, if idle resources on NFVI where the NS/VNF is located satisfy the requirement, the VIM increases resources requested by the NFVO/VNFM for the NS/VNF through a resource resilient scaling operation.

In the resource adjustment manner, if the idle resources on the NFVI where the NS/VNF is located do not satisfy the requirement, the VIM migrates an NS/VNF for traffic with a lower priority to another DC such as to the central DC and releases resources required by the ultra-low latency traffic. Then, the VIM increases the resources requested by the NFVO/VNFM for the NS/VNF through the resource resilient scaling operation.

In an NS/VNF migration manner, an NS/VNF deployed at the central DC is generally migrated to the edge DC or an NS/VNF deployed at the edge DC is deployed to the access DC. Generally, the NS/VNF migration manner is used to satisfy the requirement on the ultra-low latency traffic performance when the requirement on the ultra-low latency traffic performance cannot be satisfied through the resource resilient scaling operation or when local resources are insufficient and local resources occupied by other traffic cannot be released.

When the VIM determines to adopt the NS/VNF migration manner, the VIM initiates an NS/VNF migration request to the VNFM/NFVO for the VNFM/NFVO to determine which NS/VNFs are to be migrated and performs a migration operation. The VIM may also be authorized by the NFVO/VNFM to directly perform an NS/VNF migration operation.

In step 707, when the VIM completes resource adjustment or NS/VNF migration, an execution result is reported to the MANO (NFVO or VNFM).

In step 708, when the NS/VNF migration is completed or the resource resilient scaling operation is completed, the NFVO/VNFM notifies the OSS/EMS that the traffic processing performance of the NS/VNF has been improved. The OSS/EMS tests the traffic performance and notifies the MANO system if the performance requirement is satisfied. If the requirement is not satisfied, a warning is continued and the MANO continues to perform resource adjustment and position deployment operations according to an ultra-low latency traffic strategy to increase the performance requirement until the performance is adjusted and satisfies the requirement or the adjusted traffic performance cannot be improved.

With this embodiment, according to an ultra-low latency strategy, in response to insufficient resources, the MANO performs resource scheduling in time, migrates other local NS/VNFs according to priorities of served traffic, migrates an NS/VNF for traffic with a low priority to another NFVI or another DC, and preferentially ensures that idle resources are scheduled to the NS/VNF for the ultra-low latency traffic, so as to ensure the ultra-low latency traffic performance and improve user experience.

### Embodiment five

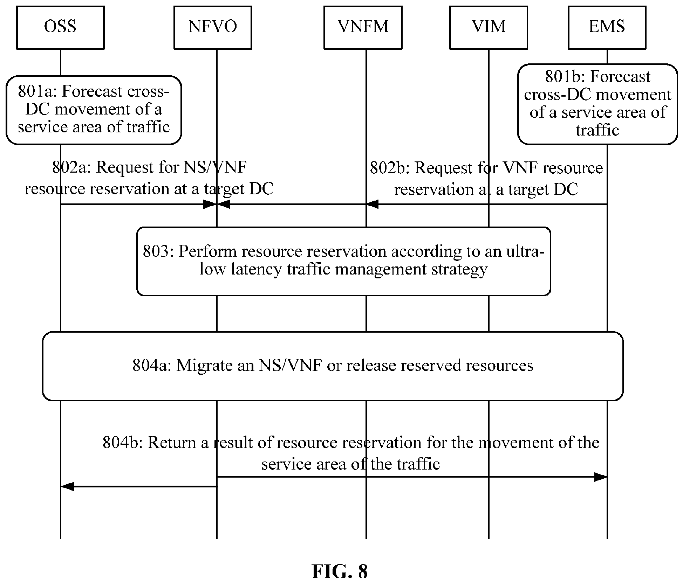

This embodiment relates to a solution for movement of a service area of ultra-low latency traffic. As shown in FIG. 8, the service area of the ultra-low latency traffic has a mobility characteristic in a mobility scenario. When the service area moves, the service area may move from a source edge DC to a target edge DC. At this time, an MANO needs to reserve resources at the target DC in advance. When a terminal moves to the target DC, an NS/VNF for the ultra-low latency traffic may be moved from the source DC to the target DC in real time, so as to ensure that ultra-low latency traffic performance does not increase due to the mobility of the service area.

This embodiment is implemented in conjunction with steps described below.

In step 801, the area of the ultra-low latency traffic moves from an edge DC for current deployment to another edge DC. For example, a 3GPP terminal that operates a network service for a certain type of ultra-low latency traffic moves from one eNodeB to another eNodeB. If resources are not reserved at the target DC, the handover from the source edge DC to the target edge DC takes a relatively long time, and the ultra-low latency traffic performance cannot satisfy a traffic requirement.

In this scenario, an OSS/EMS may forecast that the terminal will move from the source edge DC to the target edge DC according to a position movement trajectory of the terminal, or a service provider may forecast that the terminal will move from the source edge DC to the target edge DC according to a plan of the ultra-low latency traffic.

In step 802, the OSS/EMS initiates a request for resource reservation at the target edge DC to an MANO system, where the request carries information about the target edge DC, information about the NS or VNF that is to be migrated and that serves the ultra-low latency traffic, a resource requirement, and an ultra-low latency traffic indication.

In step 803, after receiving information about NS/VNF resource reservation, the MANO reserves resources at the target edge DC according to the ultra-low latency traffic indication and an ultra-low latency traffic resource management strategy.

The NFVO determines whether resources at the target edge DC satisfy a resource reservation requirement of the ultra-low latency traffic. If so, the NFVO directly notifies a corresponding VIM to perform resource reservation. If not, the MANO performs resource scheduling in time, migrates other NS/VNFs deployed at the target DC according to traffic priorities, migrates an NS/VNF for traffic with a lower priority to another DC, releases resources at the source edge DC, and then notifies the corresponding VIM to perform resource reservation. A time parameter of a timer may be set for resource reservation and a release is performed when the timer expires.

In step 804, when the service area of the certain type of ultra-low latency traffic moves to the target edge DC, the OSS/BSS notifies the NFVO to migrate all NS/VNFs serving the ultra-low latency traffic from the source edge DC to the target edge DC.

If the certain type of ultra-low latency traffic fails to move to the target edge DC within a specified time, the target edge DC releases the reserved resources after the timer for resource reservation expires according to an ultra-low latency strategy and rule. Alternatively, the NFVO applies to the OSS/EMS for a resource release, and the NFVO releases the reserved resources after receiving a notification of the OSS/EMS to release the resources.

The MANO returns a result to the OSS/EMS after performing the resource release or successfully migrating the NS/VNF.

With this embodiment, when the service area of the ultra-low latency traffic moves across DCs, resources at the target edge DC are reserved in advance, so as to ensure that when the service area of the ultra-low latency traffic moves to the target edge DC, the NS or VNF serving the ultra-low latency traffic at the source edge DC can be directly migrated to the target edge DC, thereby ensuring ultra-low latency traffic performance. In response to a failure to move to the target edge DC within a specified time, the target edge DC releases the reserved resources according to the strategy so that resource utilization is maximized.

### Embodiment six

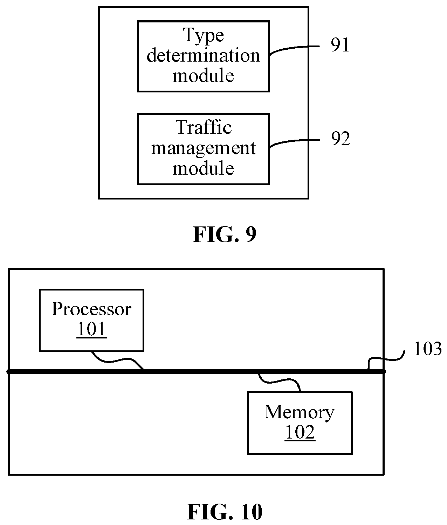

This embodiment provides a traffic resource management apparatus. Referring to FIG. 9, the traffic resource management apparatus includes a type determination module 91 and a traffic resource management module 92.

The type determination module 91 is configured to determine a type of traffic to which an NS or a VNF to be managed is applied.

The traffic resource management module 92 is configured to: when the type of traffic to which the NS or the VNF is applied is low latency traffic, provide a corresponding management service for the NS or the VNF according to a low latency traffic resource management strategy.

In some embodiments, the method may further include content described below.

The low latency traffic resource management strategy includes at least one of strategies described below.

A resource for the NS or the VNF for the low latency traffic is preferentially allocated.

The NS or the VNF for the low latency traffic is deployed at a position close to a user. Given a latency requirement, the low latency traffic tends to require more resource redundancy to satisfy the latency requirement when a relatively large file is processed. Therefore, to ensure a resource for the low latency traffic, the low latency traffic may be configured with a higher resource allocation priority so that during resource allocation, a requirement of the low latency traffic is preferentially satisfied. Moreover, when the NS or the VNF for the low latency traffic is deployed at the position close to the user, a transmission duration can be reduced as much as possible, so as to ensure the timeliness of the low latency traffic.

In response to insufficient network resources, the NS or the VNF for the low latency traffic preempts a resource occupied by traffic other than the low latency traffic.

When the NS or the VNF for the low latency traffic is instantiated, a resource applied by the NS or the VNF is over-configured.

Optionally, the traffic type determination module 91 is configured to determine the type of traffic to be a low latency traffic type; and the traffic resource management module 92 is configured to provide at least one management service among preferential resource allocation, deployment at a position close to a user, resource preemption, or a resource over-configuration for the NS or the VNF for the low latency traffic type according to a low latency traffic management strategy.

In some embodiments, the operation in which the type of traffic to which the NS or the VNF to be managed is applied is determined may include operations described below.

It is determined whether an information model description of the NS or the VNF includes a low latency traffic parameter.

When the information model description of the NS or the VNF includes an ultra-low latency traffic parameter, it is determined that the NS or the VNF is applied to the low latency traffic. The low latency traffic parameter may include at least one of a latency parameter, a position deployment parameter, a resource requirement parameter, or a low latency traffic identification. The information model description of the NS or the VNF is different according to a type of the NS or the VNF. An information model description of the VNF is a VNFD, and an information model description of the NS is an NSD. The latency parameter may represent a latency requirement of the traffic, the position deployment parameter represents a deployment position of the traffic, the resource requirement parameter represents a resource required by the traffic, and the low latency traffic identification directly identifies whether the type of traffic is the low latency traffic.

In some embodiments, an operation may be further included.

When a request is initiated for an operation on the NS or the VNF, a low latency traffic indication is carried in the request for the operation, where the low latency traffic indication is used for indicating that the operation is applied to the low latency traffic. An operation request may be an instantiation request or other operation requests.

In some embodiments, an operation may be further included.

When the NS or the VNF is instantiated, an instance for the low latency traffic is deployed at a local data center (DC) or a DC close to the user according to at least one of the low latency traffic resource management strategy or the low latency traffic parameter carried in an information model of the NS or the VNF. The local DC or the DC close to the user may be an access DC, an edge DC, or the like.

In some embodiments, an operation may be further included.

The low latency traffic resource management strategy is configured, and a low latency traffic resource operation strategy is generated according to the low latency traffic resource management strategy.

In some embodiments, an operation may be further included.

When an operation corresponding to the operation request is identified as an operation applied to the low latency traffic, the operation is performed by using the low latency traffic resource operation strategy.

In some embodiments, an operation may be further included.

When the NS or the VNF applied to the low latency traffic is instantiated, a resource for the NS or the VNF is over-configured according to the low latency traffic resource management strategy. An over-configuration refers to a configuration of resources more than what is required in theory in a configuration process of the low latency traffic, thereby providing a certain redundancy for the low latency traffic and ensuring a normal requirement of the low latency traffic.

In some embodiments, operations may be further included.

Low latency traffic performance during an operation of the NS or the VNF is determined.

In response to a decrease of the low latency traffic performance, the resource for the NS or the VNF is dynamically increased.

In some embodiments, the operation in which the low latency traffic performance during the operation of the NS or the VNF is determined may include at least one of operations described below.

Notification information in response to the decrease of the low latency traffic performance is received, and the low latency traffic performance during the operation of the NS or the VNF is determined according to the notification information.

Data on the low latency traffic performance of the NS or the VNF is collected, and the low latency traffic performance during the operation of the NS or the VNF is determined according to the data on the low latency traffic performance. The low latency traffic performance may be acquired through receiving and reporting or an active acquisition. The active acquisition may be an acquisition at a certain period or a random acquisition according to a predetermined algorithm.

In some embodiments, at least one of operations may be further included.

In response to at least one of the low latency traffic performance not satisfying a requirement or a local resource occupied by the NS or the VNF being insufficient, other traffic with a low priority is migrated according to priorities of local traffic. After traffic with a low priority is migrated, a ratio at which the local resource is provided for the low latency traffic can be increased to a certain extent, thereby ensuring the low latency traffic performance.

In an embodiment, the method further includes at least one of steps described below.

When the low latency traffic performance does not satisfy the requirement and/or the local resource occupied by the NS or the VNF is insufficient, the low latency traffic preempts, as a high traffic priority, a resource for a low traffic priority according to a traffic resource strategy. When the low latency traffic performance does not satisfy the requirement and/or the local resource occupied by the NS or the VNF is insufficient, an NS or a VNF for traffic with a low traffic priority is migrated or terminated, and a resource is released for the low latency traffic to use. In some embodiments, in response to movement of the low latency traffic, the method may further include a step described below.

A resource is reserved in a target area of the movement. For example, the resource is reserved for a migration of the NS or the VNF. After the resource is reserved, when the low latency traffic moves to this area, an NS/VNF for the low latency traffic may be deployed in a target DC area, or an NS/VNF at a source DC may be migrated to the target DC area.

According to the traffic resource management apparatus provided by the embodiments of the present disclosure, the type of traffic to which the NS or the VNF to be managed is applied is determined; and in response to the NS or the VNF being applied to the low latency traffic, the corresponding management service is provided for the NS or the VNF according to the low latency traffic resource management strategy. In some implementations, targeted management is performed on the NS or the VNF based on the type of traffic to which the NS or the VNF is applied so that differentiated management of the low latency traffic is achieved and user experience is improved.

In the embodiments of the present disclosure, an MANO may download or configure an ultra-low latency traffic resource management strategy and formulate a different ultra-low latency traffic resource operation strategy for an NFVO/VNFM/VIM. According to the ultra-low latency traffic resource management and operation strategies, the NS/VNF for the traffic may be deployed at the position close to the user, resources are over-allocated, resource adjustment is performed in time when traffic performance decreases, and a resource for a low traffic priority is preempted when the resource is insufficient.

In addition, the MANO may also subscribe to or periodically collect data on ultra-low latency traffic performance according to characteristics of the ultra-low latency traffic. When the MANO senses that a decrease of the ultra-low latency traffic performance reaches an early warning, the MANO can actively initiate the adjustment of a resource or a deployment position of the NS/VNF for the ultra-low latency traffic so that the ultra-low latency traffic performance can be recovered in time and the user experience is satisfied.

When a service area of the ultra-low latency traffic moves, a resource required by the ultra-low latency traffic is reserved in a target area of movement, and a timer may be set. If the service area fails to move to the area within a specified time, the reserved resource is released so that resource utilization is maximized. If the service area of the ultra-low latency traffic moves to the target area, a related NS/VNF in a source area is migrated to the target area or a new NS/VNF is instantiated in the target area for the ultra-low latency traffic.

### Embodiment seven

This embodiment further provides a network device. Referring to FIG. 10, the network device includes a processor 101, a memory 102, and a communication bus 103.

The communication bus 103 is configured to implement connection and communication between the processor 101 and the memory 102.

The processor 101 is configured to execute one or more computer programs stored in the memory 102 to perform the method in various embodiments described above.

This embodiment further provides a computer-readable storage medium. The computer-readable storage medium includes volatile or nonvolatile and removable or non-removable media implemented in various methods or technologies for the storage of information (such as computer-readable instructions, data structures, computer program modules, or other data). The computer-readable storage medium includes, but is not limited to, a random-access memory (RAM), a read-only memory (ROM), an electrically erasable programmable read-only memory (EEPROM), a flash memory, or other memory technologies, a compact disc read-only memory (CD-ROM), a digital video disk (DVD), or other optical storages, a magnetic cassette, a magnetic tape, a magnetic disk, or other magnetic storage devices, or other media that can be used for storing desired information and that can be accessed by a computer.

The computer-readable storage medium in this embodiment may be configured to store one or more computer programs executable by a processor to implement the method in various embodiments described above.

This embodiment further provides a computer program (or computer software). The computer program may be distributed on a computer-readable medium and executed by a computing apparatus to implement the method in various embodiments described above.

This embodiment further provides a computer program product. The computer program product includes a computer-readable apparatus. The preceding computer program is stored on the computer-readable apparatus. The computer-readable apparatus in this embodiment may include the computer-readable storage medium described above.

Some or all steps of the preceding method and function modules/units in the preceding system or apparatus may be implemented as software (which may be implemented by computer program codes executable by a computing apparatus), firmware, hardware, and suitable combinations thereof. In the hardware implementation, the division of the function modules/units in the preceding description may not correspond to the division of physical components. For example, one physical component may have multiple functions, or one function or step may be performed jointly by multiple physical components. Some or all physical components may be implemented as software executed by a processor such as a central processing unit, a digital signal processor, or a microprocessor, may be implemented as hardware, or may be implemented as integrated circuits such as application-specific integrated circuits.

In addition, communication media generally include computer-readable instructions, data structures, computer program modules, or other data in carriers or in modulated data signals in other transport mechanisms and may include various information delivery media. Therefore, the present disclosure is not limited to any particular combination of hardware and software.

## Claims

1. A traffic resource management method, comprising:
determining (401), by a Network Function Virtualization Orchestrator, NFVO, a type of traffic to which a network service, NS, or a virtualized network function, VNF, is applied; and
in response to the type of traffic to which the NS or the VNF is applied being low latency traffic, providing (402), by a Network Functions Virtualization-Management and Orchestration, NFV-MANO, a corresponding management service for the NS or the VNF according to a low latency traffic resource management strategy;
wherein the method is **characterized by** further comprising: in response to the NS or the VNF for the low latency traffic being instantiated, deploying, by the NFV-MANO, the instantiated NS or the instantiated VNF at a local data center, DC, or at a DC close to the user according to at least one of the low latency traffic resource management strategy or the low latency traffic parameter carried in an information model of the NS or the VNF;
wherein the low latency traffic resource management strategy comprises at least one of: allocating, by the NFV-MANO, a resource for the NS or the VNF for the low latency traffic prior to traffic other than the low latency traffic; in response to insufficient network resources, preempting, by the NFV-MANO, a resource occupied by traffic other than the low latency traffic; or in response to the NS or the VNF for the low latency traffic being instantiated, configuring, by the NFV-MANO, resources for the instantiated NS or the instantiated VNF, wherein a number of the resources is larger than or equal to a number of a resource configured theoretically.

2. The method of claim 1, wherein determining, by the NFVO, the type of traffic to which the NS or the VNF is applied comprises:
determining, by the NFVO, whether an information model description of the NS or the VNF comprises a description of a low latency traffic parameter; and
in response to the information model description of the NS or the VNF comprising the description of the low latency traffic parameter, determining, by the NFVO, that the NS or the VNF is applied to the low latency traffic.

3. The method of claim 2, wherein the low latency traffic parameter comprises at least one of a latency parameter, a position deployment parameter, a resource requirement parameter, or a low latency traffic identification.

4. The method of any one of claims 1 to 3, before determining, by the NFVO, the type of the traffic to which the NS or the VNF is applied, further comprising:
initiating, by an Operations Support System /Business Support System, OSS/BSS, a NS or VNF instantiation request to the NFVO; and
carrying, by the OSS/BSS, a low latency traffic indication in the NS or VNF instantiation request, wherein the low latency traffic indication is used for indicating that the NS or VNF instantiation request is applied to the low latency traffic.

5. The method of any one of claims 1 to 3, further comprising:
determining, by the NFVO, low latency traffic performance during an operation of the NS or the VNF; and
in response to a decrease of the low latency traffic performance, dynamically increasing, by the NFV-MANO, a traffic resource for the NS or the VNF.

6. The method of claim 5, wherein determining, by the NFVO, the low latency traffic performance during the operation of the NS or the VNF comprises at least one of:
receiving, by the NFVO, notification information that current low latency traffic performance decreases, and determining, by the NFVO, the low latency traffic performance during the operation of the NS or the VNF according to the notification information; or
collecting, by the NFVO, data on the low latency traffic performance of the NS or the VNF, and determining, by the NFVO, the low latency traffic performance during the operation of the NS or the VNF according to the data on the low latency traffic performance.

7. The method of any one of claims 1 to 3, wherein
in response to insufficient network resources, preempting, by the NFV-MANO, the resource occupied by traffic other than the low latency traffic comprises: in response to at least one of low latency traffic performance not satisfying a requirement or a local resource occupied by the NS or the VNF being insufficient, configuring, by the NFV-MANO, a higher resource allocation priority and a lower resource allocation priority for the low latency traffic and the traffic other than the low latency traffic respectively, and preempting, by the NFV-MANO, a resource occupied by the traffic with the lower resource allocation priority; or
the method further comprises: in response to at least one of low latency traffic performance not satisfying a requirement or a local resource occupied by the NS or the VNF being insufficient, migrating or terminating an NS or a VNF for traffic with a low traffic priority, and releasing a resource occupied by the traffic with the lower traffic priority for the low latency traffic to use.

8. A network device, comprising a processor (101), a memory (102), and a communication bus (103); wherein
the communication bus (103) is configured to implement connection and communication between the processor (101) and the memory (102); and
the processor (101) is configured to execute one or more computer programs stored in the memory (102) to perform the method of any one of claims 1 to 7.

9. A computer-readable storage medium, which is configured to store one or more computer programs, wherein the one or more computer programs are executable by one or more processors to implement the method of any one of claims 1 to 7.

## Patentansprüche

1. Verfahren zur Verwaltung von Verkehrsressourcen, umfassend:
Bestimmen (401) einer Verkehrsart durch einen Netzwerkfunktionsvirtualisierungs-Orchestrator (NFVO), auf die ein Netzwerkdienst (NS) oder eine virtualisierte Netzwerkfunktion (VNF) angewendet wird; und
Bereitstellen (402) eines entsprechenden Verwaltungsdienstes für den NS oder die VNF gemäß einer Strategie zur Verwaltung von Verkehrsressourcen mit geringer Latenz durch eine Netzwerkfunktionsvirtualisierungs-Verwaltung und -Orchestrierung (NFV-MANO) als Reaktion darauf, dass es sich bei der Verkehrsart, auf die der NS oder die VNF angewendet wird, um Verkehr mit geringer Latenz handelt;
wobei das Verfahren **dadurch gekennzeichnet ist, dass** es ferner Folgendes umfasst: als Reaktion darauf, dass der NS oder die VNF für den Verkehr mit geringer Latenz instanziiert wird, Bereitstellen (404) des instanziierten NS oder der instanziierten VNF durch die NFV-MANO in einem lokalen Datenzentrum (DC) oder in einem DC in der Nähe des Benutzers gemäß mindestens einer oder einem von der Strategie zur Verwaltung von Verkehrsressourcen mit geringer Latenz und dem Verkehrsparameter mit geringer Latenz, der in einem Informationsmodell des NS oder der VNF enthalten ist;
wobei die Strategie zur Verwaltung von Verkehrsressourcen mit geringer Latenz mindestens eines des Folgenden umfasst: Zuweisen einer Ressource für den NS oder die VNF für den Verkehr mit geringer Latenz durch die NFV-MANO vor Verkehr, der nicht der Verkehr mit geringer Latenz ist; Vorrangigmachen einer Ressource durch die NFV-MANO, die durch anderen Verkehr als den Verkehr mit geringer Latenz belegt ist, als Reaktion auf unzureichende Netzwerkressourcen; und als Reaktion auf die Instanziierung des NS oder der VNF für den Verkehr mit geringer Latenz, Konfigurieren von Ressourcen für den instanziierten NS oder die instanziierte VNF durch die NFV-MANO, wobei die Anzahl der Ressourcen größer oder gleich der Anzahl einer theoretisch konfigurierten Ressource ist.

2. Verfahren nach Anspruch 1, wobei das Bestimmen der Verkehrsart durch die NFVO, auf die der NS oder die VNF angewendet wird, Folgendes umfasst:
Feststellen durch die NFVO, ob eine Informationsmodellbeschreibung des NS oder der VNF eine Beschreibung eines Verkehrsparameters mit geringer Latenz umfasst; und
Feststellen durch die NFVO, dass der NS oder die VNF auf den Verkehr mit geringer Latenz angewendet wird, als Reaktion darauf, dass die Informationsmodellbeschreibung des NS oder der VNF die Beschreibung des Verkehrsparameters mit geringer Latenz umfasst.

3. Verfahren nach Anspruch 2, wobei der Verkehrsparameter mit geringer Latenz mindestens eines des Folgenden umfasst: einen Latenzparameter, einen Positionsbereitstellungsparameter, einen Ressourcenanforderungsparameter und eine Verkehrskennung mit geringer Latenz.

4. Verfahren nach einem der Ansprüche 1 bis 3, das vor der Bestimmung der Verkehrsart durch die NFVO, auf die der NS oder die VNF angewendet wird, zusätzlich Folgendes umfasst:
Initiieren einer NS- oder VNF-Instanziierungsanforderung an die NFVO durch ein Betriebsunterstützungssystem/Business-Support-System (OSS/BSS); und
Übertragen eines Verkehrshinweises mit geringer Latenz in der NS- oder VNF-Instanziierungsanforderung durch das OSS/BSS, wobei der Verkehrshinweis mit geringer Latenz dazu dient, darauf hinzuweisen, dass die NS- oder VNF-Instanziierungsanforderung auf den Verkehr mit geringer Latenz angewendet wird.

5. Verfahren nach einem der Ansprüche 1 bis 3, umfassend ferner:
Bestimmen der Leistung des Verkehrs mit geringer Latenz während eines Betriebs des NS oder der VNF durch die NFVO; und
dynamisches Erhöhen einer Verkehrsressource für den NS oder die VNF durch die NFV-MANO als Reaktion auf eine Abnahme der Leistung des Verkehrs mit geringer Latenz.

6. Verfahren nach Anspruch 5, wobei das Bestimmen der Leistung des Verkehrs mit geringer Latenz während des Betriebs des NS oder der VNF durch die NFVO mindestens eines des Folgenden umfasst:
Empfangen von Benachrichtigungsinformationen durch die NFVO, dass die aktuelle Leistung des Verkehrs mit geringer Latenz abnimmt, und Bestimmen der Leistung des Verkehrs mit geringer Latenz während des Betriebs des NS oder der VNF durch die NFVO gemäß den Benachrichtigungsinformationen; oder
Sammeln von Daten über die Leistung des Verkehrs mit geringer Latenz des NS oder der VNF durch die NFVO und Bestimmen der Leistung des Verkehrs mit geringer Latenz während des Betriebs des NS oder der VNF durch die NFVO gemäß den Daten über die Leistung des Verkehrs mit geringer Latenz.

7. Verfahren nach einem der Ansprüche 1 bis 3, wobei
das Vorrangigmachen der Ressource durch die NFV-MANO, die durch anderen Verkehr als den Verkehr mit geringer Latenz belegt ist, als Reaktion auf unzureichende Netzwerkressourcen, Folgendes umfasst: Konfigurieren einer höheren Priorität für die Ressourcenzuweisung und einer niedrigeren Priorität für die Ressourcenzuweisung jeweils für den Verkehr mit geringer Latenz bzw. den anderen Verkehr als den Verkehr mit geringer Latenz durch die NFV-MANO als Reaktion auf mindestens einer der folgenden Tatsachen, dass die Leistung des Verkehrs mit geringer Latenz eine Anforderung nicht erfüllt und dass eine von dem NS oder der VNF belegte lokale Ressource unzureichend ist, und Vorrangigmachen einer vom Verkehr mit der niedrigeren Priorität für die Ressourcenzuweisung belegten Ressource durch die NFV-MANO; oder
das Verfahren ferner Folgendes umfasst: Migrieren oder Beenden eines NS oder einer VNF für Verkehr mit einer niedrigen Verkehrspriorität als Reaktion auf mindestens einer der folgenden Tatsachen, dass die Leistung des Verkehrs mit geringer Latenz eine Anforderung nicht erfüllt und dass eine von dem NS oder der VNF belegte lokale Ressource unzureichend ist, und Freigeben einer vom Verkehr mit der niedrigeren Verkehrspriorität belegten Ressource für die Nutzung durch den Verkehr mit geringer Latenz.

8. Netzwerkgerät, umfassend einen Prozessor (101), einen Speicher (102) und einen Kommunikationsbus (103), wobei
der Kommunikationsbus (103) so konfiguriert ist, dass er eine Verbindung und Kommunikation zwischen dem Prozessor (101) und dem Speicher (102) implementiert; und
der Prozessor (101) so konfiguriert ist, dass er ein oder mehrere im Speicher (102) gespeicherte Computerprogramme ausführt, um das Verfahren nach einem der Ansprüche 1 bis 7 durchzuführen.

9. Computerlesbares Speichermedium, das zum Speichern eines oder mehrerer Computerprogramme konfiguriert ist, wobei das eine oder die mehreren Computerprogramme von einem oder mehreren Prozessoren ausgeführt werden können, um das Verfahren nach einem der Ansprüche 1 bis 7 zu implementieren.

## Revendications

1. Procédé de gestion de ressources de trafic, comprenant :
déterminer (401), par un orchestrateur de virtualisation de fonction de réseau, NFVO, un type de trafic auquel est appliqué un service réseau, NS, ou une fonction de réseau virtualisée, VNF ; et
en réponse au fait que le type de trafic auquel est appliqué le NS ou le VNF est un trafic à faible latence, fournir (402), par une virtualisation-gestion et orchestration de fonction de réseau, NFV-MANO, un service de gestion correspondant au NS ou au VNF selon une stratégie de gestion de ressources de trafic à faible latence ;
dans lequel le procédé est **caractérisé en ce qu'**il comprend en outre : en réponse au fait que le NS ou le VNF pour le trafic à faible latence est instancié, déployer, par le NFV-MANO, le NS instancié ou le VNF instancié à un centre de données local, DC, ou à un DC proche de l'utilisateur selon au moins l'une de la stratégie de gestion de ressources de trafic à faible latence ou du paramètre de trafic à faible latence porté dans un modèle d'information du NS ou du VNF ;
dans lequel la stratégie de gestion de ressources de trafic à faible latence comprend au moins l'une des suivantes : attribuer, par le NFV-MANO, une ressource pour le NS ou le VNF pour le trafic à faible latence avant le trafic autre que le trafic à faible latence ; en réponse à une insuffisance de ressources réseau, préempter, par le NFV-MANO, une ressource occupée par un trafic autre que le trafic à faible latence ; ou en réponse au NS ou au VNF pour le trafic à faible latence instancié, configurer, par le NFV-MANO, des ressources pour le NS instancié ou le VNF instancié, dans lequel un nombre de ressources est supérieur ou égal à un nombre d'une ressource configuré théoriquement.

2. Procédé selon la revendication 1, dans lequel la détermination, par le NFVO, du type de trafic auquel est appliqué le NS ou le VNF, comprend :
déterminer, par le NFVO, si une description de modèle d'information du NS ou du VNF comprend une description d'un paramètre de trafic à faible latence ; et
en réponse à la description de modèle d'information du NS ou du VNF comprenant la description du paramètre de trafic à faible latence, déterminer, par le NFVO, que le NS ou le VNF est appliqué au trafic à faible latence.

3. Procédé selon la revendication 2, dans lequel le paramètre de trafic à faible latence comprend au moins l'un parmi un paramètre de latence, un paramètre de déploiement de position, un paramètre d'exigence de ressource ou une identification de trafic à faible latence.

4. Procédé selon l'une quelconque des revendications 1 à 3, dans lequel la détermination, par le NFVO, du type du trafic auquel est appliqué le NS ou le VNF, comprend :
initier, par un système de support d'opérations/système de support d'affaires, OSS/BSS, une demande d'instanciation du NS ou du VNF au NFVO ; et
porter, par l'OSS/BSS, une indication de trafic à faible latence dans la demande d'instanciation du NS ou du VNF, l'indication de trafic à faible latence étant utilisée pour indiquer que la demande d'instanciation du NS ou du VNF est appliquée au trafic à faible latence.

5. Procédé selon l'une quelconque des revendications 1 à 3, comprenant en outre :
déterminer, par le NFVO, une performance du trafic à faible latence lors d'un fonctionnement du NS ou du VNF ; et
en réponse à une réduction de la performance du trafic à faible latence, augmenter dynamiquement, par le NFV-MANO, une ressource de trafic pour le NS ou le VNF.

6. Procédé selon la revendication 5, dans lequel la détermination, par le NFVO, de la performance du trafic à faible latence lors du fonctionnement du NS ou du VNF, comprend au moins l'une des suivantes :
recevoir, par le NFVO, des informations de notification indiquant que la performance du trafic à faible latence actuel diminue, et déterminer, par le NFVO, la performance du trafic à faible latence lors du fonctionnement du NS ou du VNF selon les informations de notification ; ou
collecter, par le NFVO, des données de la performance du trafic à faible latence du NS ou du VNF, et déterminer, par le NFVO, la performance du trafic à faible latence lors du fonctionnement du NS ou du VNF selon les données de la performance du trafic à faible latence.

7. Procédé selon l'une quelconque des revendications 1 à 3, dans lequel,
en réponse à une insuffisance de ressources réseau, la préemption, par le NFV-MANO, de la ressource occupée par un trafic autre que le trafic à faible latence comprend : en réponse au fait qu'au moins une performance du trafic à faible latence ne satisfait pas à une exigence ou qu'une ressource locale occupée par le NS ou le VNF est insuffisante, configurer, par le NFV-MANO, une priorité d'allocation de ressources plus haute et une priorité d'allocation de ressources plus basse pour le trafic à faible latence et le trafic autre que le trafic à faible latence respectivement, et préempter, par le NFV-MANO, une ressource occupée par le trafic ayant la priorité d'allocation de ressources plus basse ; ou
le procédé comprend en outre : en réponse au fait qu'au moins une performance du trafic à faible latence ne satisfait pas à une exigence ou qu'une ressource locale occupée par le NS ou le VNF est insuffisante, faire migrer ou terminer un NS ou un VNF pour un trafic ayant une basse priorité de trafic, et libérer une ressource occupée par le trafic ayant la priorité de trafic plus basse pour le trafic à faible latence à utiliser.

8. Périphérique réseau, comprenant un processeur (101), une mémoire (102) et un bus de communication (103) ; dans lequel,
le bus de communication (103) est configuré pour mettre en œuvre une connexion et une communication entre le processeur (101) et la mémoire (102) ; et
le processeur (101) est configuré pour exécuter un ou plusieurs programmes informatiques stockés dans la mémoire (102) afin de mettre en œuvre le procédé selon l'une quelconque des revendications 1 à 7.

9. Support de stockage lisible par ordinateur, qui est configuré pour stocker un ou plusieurs programmes informatiques, dans lequel l'un ou plusieurs programmes informatiques sont exécutés par un ou plusieurs processeurs afin de mettre en œuvre le procédé selon l'une quelconque des revendications 1 à 7.
